# FASCICULE DE BREVET EUROPEEN

(11) **EP 3 855 058 B1**
(45) Date de publication et mention de la délivrance du brevet: **08.06.2022**
(21) Numéro de dépôt: 20209388.6
(22) Date de dépôt: 24.11.2020
(51) Int. Cl.: F16L 37/12, F16L 37/088

(54) **DISPOSITIF DE RACCORD TUBULAIRE**
ROHRVERBINDUNGSVORRICHTUNG
TUBULAR COUPLING DEVICE

(30) Priorité: 23.01.2020 FR 2000655
(43) Date de publication de la demande: 28.07.2021
(73) Titulaire: A. Raymond et Cie, 38000 Grenoble (FR)
(72) Inventeur: ULRICH, Jérôme, 38140 SAINT BLAISE DU BUIS (FR)
(74) Mandataire: IP Trust

(56) Documents cités:
- EP-A1- 2 402 640
- WO-A2-2011/140281
- US-B2- 7 387 318

## Description

### DOMAINE DE L'INVENTION

La présente invention concerne un dispositif de raccord tubulaire pour connecter des tuyaux ou conduits. Elle trouve notamment son application dans le domaine automobile et plus particulièrement dans les connexions fluidiques de système de refroidissement.

### ARRIERE PLAN TECHNOLOGIQUE DE L'INVENTION

Il existe dans l'état de la technique des dispositifs de raccord tubulaire permettant de connecter entre eux un embout à un corps principal, la connexion entre ces deux éléments étant verrouillée par une agrafe métallique.

Par exemple, dans le document US7387318 et le document EP2402640, le corps principal (qui est destiné à recevoir l'agrafe, ce qui le distingue de l'embout) comporte des fentes latérales diamétralement opposées et symétriques par rapport à un axe radial. Une agrafe en forme de U, formée d'une tête reliée à deux branches, est destinée à enserrer le corps principal. L'agrafe peut occuper deux positions :
- une position enfoncée dans laquelle la tête de l'agrafe est en contact avec le corps principal ; les branches de l'agrafe traversent le connecteur femelle et débouchent dans son volume intérieur, sensiblement parallèlement à l'axe radial. Lorsque l'embout, présentant un collet tronconique muni d'une rainure annulaire, est inséré dans le corps principal, les branches de l'agrafe sont écartées par le collet, puis bloquées dans la rainure annulaire, lorsque l'embout est totalement inséré dans le corps principal. Dans cette position enfoncée de l'agrafe, la connexion entre le corps principal et l'embout est verrouillée.
- une position relevée dans laquelle la tête de l'agrafe est éloigné du corps principal; les branches sont maintenues sensiblement tangentes au corps principal et ne débouchent pas dans son volume intérieur. L'embout peut ainsi être séparé du corps principal.

Des éléments de guidage disposés sur la surface externe du corps principal permettent de guider l'agrafe entre ces deux positions.

Ce type de raccord tubulaire nécessite d'insérer l'embout dans le corps principal pour activer le mécanisme de verrouillage. Or dans certains cas, l'embout peut présenter une forme ou des dimensions particulières, qui ne permettent pas de l'insérer dans le corps principal. D'une manière plus générale, il peut être préférable de choisir une configuration de raccord selon laquelle c'est le corps principal qui s'insère dans l'embout. Cela peut notamment permettre de donner une forme compacte au raccord tubulaire. Les raccords tubulaires décrits précédemment ne sont pas compatibles avec cette configuration.

### OBJET DE L'INVENTION

Un but de l'invention est de proposer un raccord tubulaire remédiant au moins en partie aux limitations de l'état de la technique. Plus particulièrement, un but de l'invention est de proposer un raccord tubulaire compatible avec une configuration selon laquelle le corps principal, muni de l'agrafe, est inséré dans l'embout.

### BREVE DESCRIPTION DE L'INVENTION

En vue de la réalisation de ce but, l'objet de l'invention propose un dispositif de raccord tubulaire comprenant :
- un embout tubulaire;
- un corps principal destiné à être inséré dans une extrémité d'accueil de l'embout tubulaire ;
- une agrafe destinée à chevaucher le corps principal, l'agrafe comportant une tête et deux branches flexibles se terminant chacune par un pied ;
le corps principal étant muni sur sa surface externe de deux éléments de guidage principaux pour respectivement recevoir les pieds de l'agrafe, et sélectivement positionner l'agrafe dans une position de déconnexion dans laquelle les deux branches flexibles sont relativement éloignées du corps principal ou dans une position de verrouillage dans laquelle les deux branches flexibles sont relativement rapprochées du corps principal;
l'embout tubulaire comprenant, du côté de l'extrémité d'accueil, deux harpons pour respectivement s'engager entre le corps principal et les branches flexibles de l'agrafe et retenir l'embout tubulaire assemblé au corps principal lorsque l'on insert le corps principal dans l'extrémité d'accueil de l'embout tubulaire et lorsque l'agrafe est dans la position de verrouillage, les harpons s'agrippant alors aux branches de l'agrafe.

Selon d'autres caractéristiques avantageuses et non limitatives de l'invention, prises seules ou selon toute combinaison techniquement réalisable :
- les branches sont recourbées vers l'intérieur de l'agrafe ;
- chaque élément de guidage principal comprend une rampe pour guider le pied de l'agrafe entre la position de déconnexion et la position de verrouillage ;
- chaque élément de guidage principal comprend une encoche pour accueillir le pied de l'agrafe et maintenir l'agrafe en position de déconnexion ;
- le corps principal comprend sur sa surface externe au moins un élément de guidage secondaire pour accueillir une partie de l'agrafe ;
- le corps principal comprend, sur sa surface externe, une rainure annulaire pour recevoir un joint d'étanchéité ;
- chaque harpon comprend un plan incliné sur la face susceptible d'entrer en contact avec le corps principal lors de l'insertion du corps principal dans l'embout tubulaire ;
- l'embout comprend également, sur son extrémité d'accueil, des encoches conformées aux éléments de guidage pour empêcher toute rotation de l'embout tubulaire sur le corps principal ;
- l'embout tubulaire et le corps principal présentent une section ovale.

### BREVE DESCRIPTION DES FIGURES

D'autres caractéristiques et avantages de l'invention ressortiront de la description détaillée de l'invention qui va suivre en référence aux figures annexées sur lesquels :

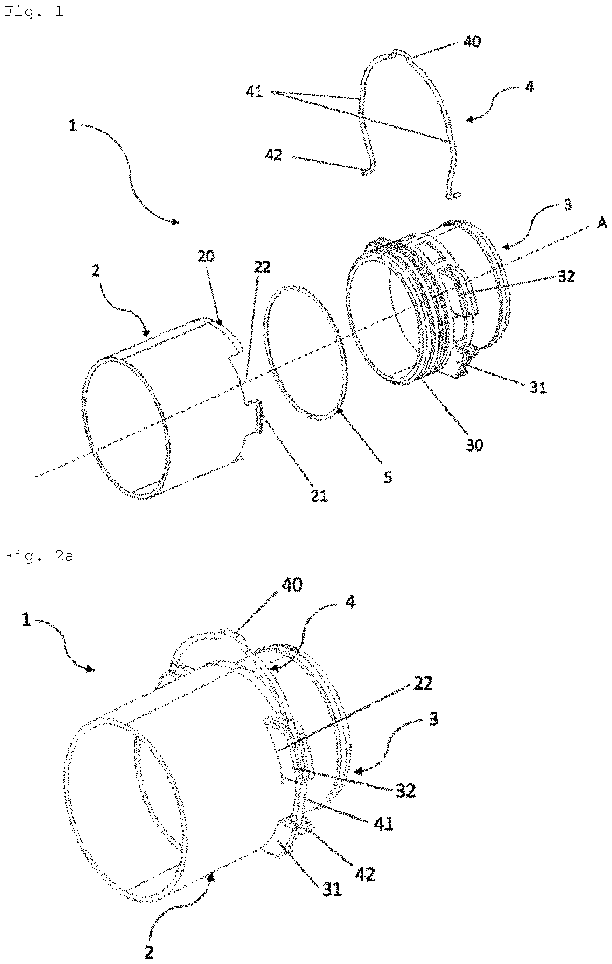

[Fig. 1] La figure 1 représente une vue éclatée d'un dispositif tubulaire conforme à l'invention ;
[Fig. 2a]
   [Fig. 2b] Les figures 2a et 2b représentent respectivement une vue d'ensemble et une vue en coupe de face d'un dispositif tubulaire conforme à l'invention où l'agrafe est en position de déconnexion.
[Fig. 3] La figure 3 représente une vue d'ensemble d'un dispositif tubulaire assemblé conforme à l'invention ;
[Fig. 4a]

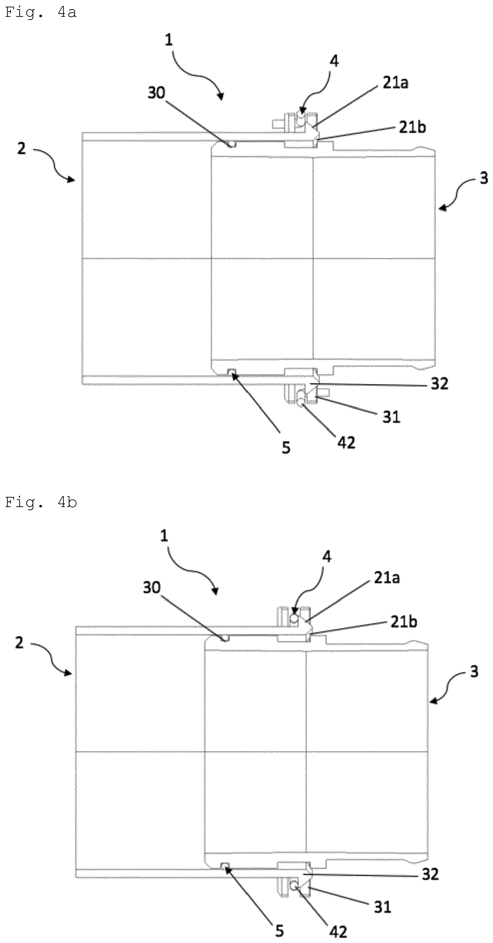

   [Fig. 4b] Les figures 4a et 4b représentent respectivement une vue en coupe d'un dispositif tubulaire conforme à l'invention où l'agrafe est en position de déconnexion et en position de verrouillage.

### DESCRIPTION DETAILLEE DE L'INVENTION

Par soucis de simplification de la description à venir, les mêmes références sont utilisées pour des éléments identiques ou assurant la même fonction. Les figures sont des représentations schématiques qui, dans un objectif de lisibilité, ne sont pas nécessairement à l'échelle.

### Présentation générale du dispositif de raccord tubulaire

La figure 1 représente une vue éclatée d'un dispositif de raccord tubulaire 1 conforme à la présente invention. Ce type de raccord tubulaire 1 peut être utilisé pour transporter un fluide tel qu'un liquide ou un gaz, par exemple de l'air.

Le dispositif de raccord tubulaire 1 comprend un embout tubulaire 2, un corps principal 3, une agrafe 4. On peut également prévoir un joint d'étanchéité 5.

Le corps principal 3 est de forme tubulaire et est destiné à être inséré selon un axe principal A dans une extrémité d'accueil 20 de l'embout tubulaire 2. Le corps principal 3 comprend ici une rainure annulaire 30, sur sa surface externe, pour accueillir le joint d'étanchéité 5.

L'agrafe 4 est portée par le corps principal 3. L'agrafe 4 comprend une tête 40 et deux branches flexibles 41 se terminant chacune par un pied 42. L'agrafe 4 est destinée à chevaucher le corps principal 3, et permettre le verrouillage de la connexion entre l'embout 2 et le corps principal 3. De manière avantageuse, les branches 41 de l'agrafe 4 sont recourbées vers l'intérieur de l'agrafe, par exemple en arc de cercle, pour former une agrafe en C. Cette forme de branche a l'avantage de présenter un encombrement réduit par rapport aux branches rectilignes d'une agrafe en U, notamment au niveau des pieds 42.

Le corps principal 3 et l'embout tubulaire 2 sont avantageusement formés d'un matériau plastique tel qu'un polyamide. L'agrafe 4 peut être formée d'un matériau métallique.

L'embout tubulaire 2 peut présenter une section interne circulaire ou ovale. Une section ovale permet de réduire dans certains cas l'encombrement du dispositif de raccordement 1. Le corps principal 3 peut quant à lui présenter une section externe circulaire ou ovale, conformée à celle de la section interne de l'embout tubulaire 2 pour permettre l'assemblage ajusté de ces deux pièces.

Dans la suite de la description, on considère que la tête 40 de l'agrafe 4 définit le haut du dispositif. Ainsi lorsque l'on parlera de « partie haute » ou « partie supérieure » du dispositif ou d'un élément du dispositif, on désignera la partie du dispositif ou de l'élément, disposée du côté de la tête 40 de l'agrafe 4 par rapport à un plan médian. Par conséquent on désignera par « partie basse » ou « partie inférieure », la partie du dispositif ou de l'élément, disposée du côté opposé à la tête 40 de l'agrafe 4 par rapport à ce plan médian.

### Description détaillée du dispositif de raccord tubulaire

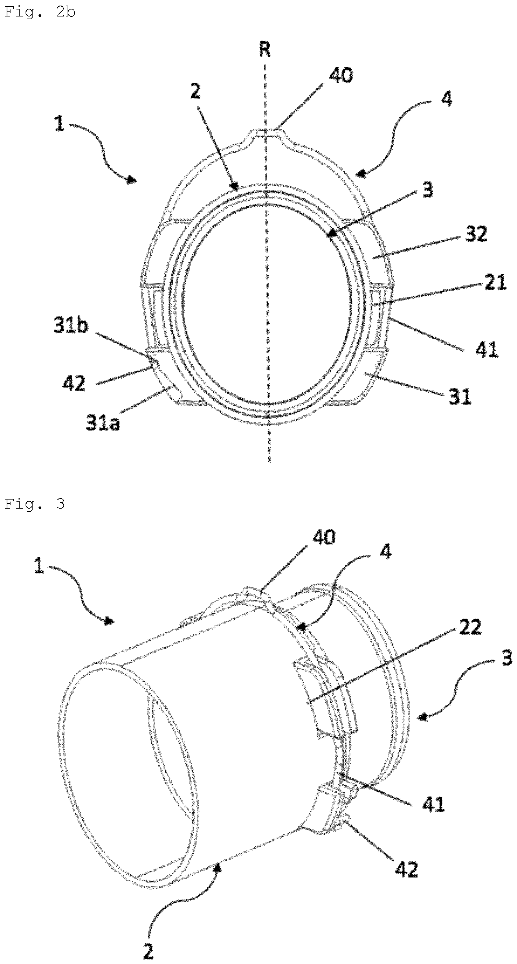

Le corps principal 3 est muni sur sa surface externe de deux éléments de guidage principaux 31 pour respectivement recevoir les pieds 42 de l'agrafe 4. Les éléments de guidage principaux 31 sont avantageusement disposés dans la partie basse du corps principal de manière symétrique par rapport à un axe radial R (visible sur la figure 2b). Les éléments de guidage principaux 31 ont pour but de sélectivement positionner l'agrafe 4 dans une position déconnexion ou dans une position de verrouillage. En position de déconnexion, la tête 40 de l'agrafe 4 est dans une position relevée par rapport au corps principal 3 et les deux branches flexibles 41 de l'agrafe 4 sont relativement éloignées du corps principal 3 (figure 2a). En position de verrouillage, la tête 40 de l'agrafe 4 est enfoncée sur le corps principal 3 et les deux branches flexibles 41 sont relativement rapprochées du corps principal 4 (figure 3).

La figure 2b représente une vue en coupe selon deux plans de coupe transversaux différent du dispositif de raccord tubulaire 1, l'agrafe 4 étant en position de déconnexion. La partie gauche de la figure 2b correspond à une coupe selon un plan transverse situé au niveau des branches 41 de l'agrafe 4. La partie droite de la figure 2b correspond à une coupe selon un plan transverse situé en amont des branches 41 de l'agrafe 4, du côté de l'embout 2.

Les éléments de guidage principaux 31 comportent ici une rampe 31a pour guider le pied 42 de l'agrafe 4 entre la position de déconnexion et la position de verrouillage. La rampe 31 est inclinée sensiblement tangentiellement à la paroi interne du corps principal 3. Dit autrement la rampe 31a est inclinée vers le bas et vers l'intérieur du dispositif de raccord 1.

Ainsi, si l'on tire sur la tête 40 de l'agrafe 4 lorsqu'elle est en position de verrouillage, le pied 42 de l'agrafe 4 vient glisser sur la rampe 31a qui, de par son inclinaison, va forcer les branches 41 de l'agrafe 4 à s'écarter l'une de l'autre, et mettre l'agrafe 4 en position de déconnexion. En position de déconnexion, les branches 41 sont écartées l'une de l'autre et relativement éloignées du corps principal 3.

De manière similaire, si l'on appui sur la tête 40 de l'agrafe 4 pour la placer de la position de déconnexion à la position de verrouillage, le pied 42 de l'agrafe 4 glisse sur la rampe 31a qui, par son inclinaison, entraîne le rapprochement des branches 41 de l'agrafe 4 l'une de l'autre, ce qui tend également à les positionner relativement rapprochées du corps principal 3.

Afin d'éviter que l'on puisse extraire complétement l'agrafe 4 du corps principal 3, et plus précisément des éléments de guidage principaux 31, lorsque l'on place l'agrafe 4 en position de déconnexion, la rampe 31a peut être délimitée en partie haute par un rebord qui forme ainsi une butée d'extraction pour le pied 42 de l'agrafe 4.

De manière avantageuse, la rampe 31a peut comprendre une encoche 31b à proximité du rebord pour former une zone d'accueil et de retenue du pied 42 de manière à maintenir l'agrafe 4 en position de déconnexion, même lorsque l'effort d'extraction de l'agrafe 4 est interrompu. On prévient de la sorte le retour naturel de l'agrafe 4 vers la position de verrouillage, les pieds 42 étant guidés naturellement par la rampe 31a vers cette position.

Le corps principal 3 peut également être muni sur sa surface externe d'au moins un élément de guidage secondaire 32 pour accueillir une partie de l'agrafe 4. Le dispositif de raccord 1 comprend ici préférentiellement deux éléments de guidage secondaires 32 destinés à accueillir respectivement une portion des branches 41 de l'agrafe 4. Les éléments de guidage secondaires 32 sont avantageusement disposés dans la partie haute du corps principal de manière symétrique par rapport à l'axe radial R. On pourrait alternativement utiliser un seul élément de guidage secondaire 32, disposé par exemple sur la partie haute du corps principal 3, pour accueillir la portion des branches 41 située dans le voisinage de la tête 40 de l'agrafe 4.

Les éléments de guidage secondaires 32 ont pour fonction de maintenir l'agrafe 4 dans un plan perpendiculaire à l'axe principal A, en prévenant tout mouvement de l'agrafe 4 selon cet axe ou en basculement autour d'un axe passant par les pieds 42. Les éléments de guidage secondaires 32 ont ici une forme en U pour loger et retenir les branches 41 en position. On pourrait envisager de configurer les éléments de guidage secondaires 32 de manière différente, par exemple par des rainures ou des nervures formées sur la surface externe du corps principal 3, dans la mesure où la fonction de maintien de l'agrafe 4 est bien mise en œuvre.

Dans le cas où le corps principal 3 et l'embout tubulaire 2 sont de section ovale, les éléments de guidage principaux 31 et/ou secondaire 32 sont configurés pour déporter la surface externe du corps principal 3 afin de former une surface de contact en arc de cercle entre les éléments de guidage 31,32 et l'agrafe 4. En effet, en l'absence de cette déportation la pente 31a pourrait être insuffisante pour permettre le bon fonctionnement du dispositif de raccord 1.

L'embout tubulaire 2 comprend quant à lui, du côté de l'extrémité d'accueil 20, deux harpons 21 pour respectivement s'engager entre le corps principal 3 et les branches flexibles 41 de l'agrafe 4 et retenir l'embout tubulaire 2 assemblé au corps principal 3 comme cela est visible sur les figures 3 et 4. Les harpons 21 sont orientés vers l'extérieur pour pouvoir s'agripper aux branches 41 de l'agrafe 4 quand l'agrafe 4 est en position de verrouillage.

Chaque harpon 21 comprend un plan incliné principal 21a orienté vers l'extérieur de l'embout 2, définissant une face susceptible d'entrer en contact avec une branche 41 de l'agrafe 4. Ce plan incliné principal favorise l'écartement des branches 41 par le harpon 21 lors de l'insertion du corps principal 3 dans l'embout tubulaire 2.

De manière avantageuse, chaque harpon 21 comprend également un plan incliné secondaire 21b orienté vers l'intérieur de l'embout 2, définissant une face susceptible d'entrer en contact avec le corps principal 3 lors de son insertion dans l'embout tubulaire 2. Ce plan incliné secondaire 21b a pour but de prévenir l'endommagement du corps principal 4, et plus particulièrement du joint d'étanchéité 5 disposé sur ce corps principal 4, lors de l'insertion du corps principal 3 dans l'embout tubulaire 2.

L'embout tubulaire 2 comprend également, sur son extrémité d'accueil 20, des encoches 22 conformées aux éléments de guidage 31,32 pour empêcher toute rotation de l'embout tubulaire 2 sur le corps principal 3, lorsque ceux-ci sont assemblés l'un à l'autre. Les éléments de guidage 31,32 et les encoches 22 forment également en combinaison des moyens de détrompage de l'assemblage.

### Mise en œuvre du dispositif de raccord tubulaire

Avant l'insertion du corps principal 3 dans l'embout tubulaire 2, l'agrafe 4 est initialement positionnée en position de verrouillage, ou dit autrement, la tête 40 de l'agrafe 4 est placée en position enfoncée. Dans cette position, les branches flexibles 41 de l'agrafe 4 sont au plus proche de la surface externe du corps principal 3 et il existe un espacement limité entre chaque branche 41 et le corps principal 3.

Le corps principal 3 est ensuite inséré dans l'extrémité d'accueil 20 de l'embout tubulaire 2, en alignant les éléments de guidage 31,32 du corps principal 2 avec les encoches 22 de l'embout tubulaire 2.

Lors de l'insertion, l'extrémité des harpons 21 s'engage dans l'espace disponible entre les branches flexibles 41 et le corps principal 3. Les plans inclinés principaux 21a favorisent la déformation des branches flexibles 41 pour agrandir l'espace disponible et permettre le passage des harpons 21. Les branches flexibles 41 reprennent leur forme une fois que les harpons 21 ont terminés leur traversée. Les branches 41 de l'agrafe 4 se referment alors sur l'embout 2. Un clic sonore peut se produire lors du passage des harpons 21 derrière les branches flexibles 41, ce clic témoignant du bon assemblage.

A l'issue de l'insertion, les harpons 21 sont alors agrippés aux branches de l'agrafe 4, il n'est pas possible de retirer le corps principal 3 de l'embout 2, la partie arrière des harpons 21 venant en butée contre les branches 41 de l'agrafe 4 si l'on tente de les désassembler. Les figures 3 et 4b illustrent le dispositif de raccord 1 ainsi assemblé.

Pour désassembler le corps principal 3 de l'embout 2, il suffit d'appliquer un effort de traction sur la tête 40 de l'agrafe 4 pour la placer en position de déconnexion (figure 2a et 2b). En exerçant une traction sur la tête 40 de l'agrafe 4, les pieds 42 de l'agrafe 4 glissent respectivement sur les rampes 31a, ce qui tend à les écarter l'un de l'autre. L'espace libre entre les branches 41 et le corps principal 2 est augmenté, ce qui permet le passage des harpons 21 (figure 4a) lors du retrait du corps principal 3 de l'embout tubulaire 2.

Bien entendu l'invention n'est pas limitée au mode de mise en œuvre décrit et on peut y apporter des variantes de réalisation sans sortir du cadre de l'invention tel que défini par les revendications.

En particulier, on pourrait envisager un nombre différent d'harpons et/ou d'élément de guidage secondaires sans sortir de la portée de l'invention.

## Revendications

1. Dispositif de raccord tubulaire (1) comprenant :
- un embout tubulaire (2);
- un corps principal (3) destiné à être inséré dans une extrémité d'accueil (20) de l'embout tubulaire (2) ;
- une agrafe (4) destinée à chevaucher le corps principal (3), l'agrafe (4) comportant une tête (40) et deux branches flexibles (41) se terminant chacune par un pied (42) ; le corps principal (3) étant muni sur sa surface externe de deux éléments de guidage principaux (31) pour respectivement recevoir les pieds (42) de l'agrafe (4), et sélectivement positionner l'agrafe (4) dans une position de déconnexion dans laquelle les deux branches flexibles (41) sont relativement éloignées du corps principal (3) ou dans une position de verrouillage dans laquelle les deux branches flexibles (41) sont relativement rapprochées du corps principal (3);
l'embout tubulaire (2) comprenant, du côté de l'extrémité d'accueil (20), deux harpons (21) pour respectivement s'engager entre le corps principal (3) et les branches flexibles (41) de l'agrafe (4) et retenir l'embout tubulaire (2) assemblé au corps principal (3) lorsque l'on insert le corps principal (3) dans l'extrémité d'accueil (20) de l'embout tubulaire (2) et lorsque l'agrafe (4) est dans la position de verrouillage, les harpons (21) s'agrippant alors aux branches (41) de l'agrafe (4).

2. Dispositif de raccord tubulaire (1) selon la revendication précédente dans lequel les branches (41) sont recourbées vers l'intérieur de l'agrafe (4).

3. Dispositif de raccord tubulaire (1) selon l'une des revendications précédentes dans lequel chaque élément de guidage principal (31) comprend une rampe (31a) pour guider le pied (42) de l'agrafe (4) entre la position de déconnexion et la position de verrouillage.

4. Dispositif de raccord tubulaire (1) selon l'une des revendications précédentes dans lequel chaque élément de guidage principal (31) comprend une encoche (31b) pour accueillir le pied (42) de l'agrafe (4) et maintenir l'agrafe (4) en position de déconnexion.

5. Dispositif de raccord tubulaire (1) selon l'une des revendications précédentes dans lequel le corps principal (3) comprend sur sa surface externe au moins un élément de guidage secondaire (32) pour accueillir une partie de l'agrafe (4).

6. Dispositif de raccord tubulaire (1) selon l'une des revendications précédentes dans lequel le corps principal (3) comprend, sur sa surface externe, une rainure annulaire (30) pour recevoir un joint d'étanchéité (5).

7. Dispositif de raccord tubulaire (1) selon la revendication précédente dans lequel chaque harpon (21) comprend un plan incliné (21b) sur la face susceptible d'entrer en contact avec le corps principal (3) lors de l'insertion du corps principal (3) dans l'embout tubulaire (2).

8. Dispositif de raccord tubulaire (1) selon l'une des revendications précédentes dans lequel l'embout (2) comprend également, sur son extrémité d'accueil (20), des encoches (22) conformées aux éléments de guidage (31,32) pour empêcher toute rotation de l'embout tubulaire (2) sur le corps principal (3).

9. Dispositif de raccord tubulaire (1) selon l'une des revendications précédentes dans lequel l'embout tubulaire (2) et le corps principal (3) présentent une section ovale.

## Patentansprüche

1. Rohrverbindungsvorrichtung (1), die Folgendes umfasst:
- ein rohrförmiges Endstück (2);
- einen Hauptkörper (3), der dazu bestimmt ist, in ein Empfangsende (20) des rohrförmigen Endstücks (2) eingeführt zu werden;
- eine Klammer (4), die dazu bestimmt ist, den Hauptkörper (3) zu überlappen, wobei die Klammer (4) einen Kopf (40) und zwei flexible Schenkel (41) aufweist, die jeweils in einem Fuß (42) enden;
wobei der Hauptkörper (3) an seiner Außenoberfläche mit zwei Hauptführungselementen (31) zum jeweiligen Aufnehmen der Füße (42) der Klammer (4) und wahlweisen Positionieren der Klammer (4) in eine Trennposition, in der die zwei flexiblen Schenkel (41) relativ weit von dem Hauptkörper (3) entfernt sind, oder in eine Verriegelungsposition, in der die zwei flexiblen Schenkel (41) relativ nahe an dem Hauptkörper (3) sind, versehen ist;
wobei das rohrförmige Endstück (2) auf der Seite des Empfangsendes (20) zwei Haken (21) zum jeweiligen Eingreifen zwischen dem Hauptkörper (3) und den flexiblen Schenkeln (41) der Klammer (4) und Festhalten des mit dem Hauptkörper (3) zusammengebauten rohrförmigen Endstücks (2) umfasst, wenn der Hauptkörper (3) in das Empfangsende (20) des rohrförmigen Endstücks (2) eingeführt wird und wenn sich die Klammer (4) in der Verriegelungsposition befindet, wobei die Haken (21) sich dann an den Schenkeln (41) der Klammer (4) festklammern.

2. Rohrverbindungsvorrichtung (1) nach dem vorhergehenden Anspruch, wobei die Schenkel (41) zu der Innenseite der Klammer (4) hin gebogen sind.

3. Rohrverbindungsvorrichtung (1) nach einem der vorhergehenden Ansprüche, wobei jedes Hauptführungselement (31) eine Rampe (31a) zum Führen des Fußes (42) der Klammer (4) zwischen der Trennposition und der Verriegelungsposition umfasst.

4. Rohrverbindungsvorrichtung (1) nach einem der vorhergehenden Ansprüche, wobei jedes Hauptführungselement (31) eine Kerbe (31b) zum Empfangen des Fußes (42) der Klammer (4) und Halten der Klammer (4) in der Trennposition umfasst.

5. Rohrverbindungsvorrichtung (1) nach einem der vorhergehenden Ansprüche, wobei der Hauptkörper (3) an seiner Außenoberfläche wenigstens ein sekundäres Führungselement (32) zum Empfangen eines Teils der Klammer (4) umfasst.

6. Rohrverbindungsvorrichtung (1) nach einem der vorhergehenden Ansprüche, wobei der Hauptkörper (3) an seiner Außenoberfläche eine ringförmige Nut (30) zum Aufnehmen eines Dichtungsrings (5) umfasst.

7. Rohrverbindungsvorrichtung (1) nach dem vorhergehenden Anspruch, wobei jeder Haken (21) eine geneigte Ebene (21b) auf der Fläche umfasst, die geeignet ist, beim Einführen des Hauptkörpers (3) in das rohrförmige Endstück (2) mit dem Hauptkörper (3) in Berührung zu kommen.

8. Rohrverbindungsvorrichtung (1) nach einem der vorhergehenden Ansprüche, wobei das Endstück (2) an seinem Empfangsende (20) auch Kerben (22) umfasst, die mit den Führungselementen (31, 32) zum Verhindern jeglicher Drehung des rohrförmigen Endstücks (2) auf dem Hauptkörper (3) ausgebildet sind.

9. Rohrverbindungsvorrichtung (1) nach einem der vorhergehenden Ansprüche, wobei das rohrförmige Endstück (2) und der Hauptkörper (3) einen ovalen Querschnitt vorweisen.

## Claims

1. Tubular connection device (1) comprising:
- a tubular end piece (2);
- a main body (3) which is intended to be inserted into a receiving end (20) of the tubular end piece (2);
- a clip (4) which is intended to straddle the main body (3), the clip (4) comprising a head (40) and two flexible legs (41) that each end in a foot (42);
the main body (3) being provided on its external surface with two main guide elements (31) for receiving the feet (42) of the clip (4), and for selectively positioning the clip (4) in a release position in which the two flexible legs (41) are relatively spaced apart from the main body (3) or in a locking position in which the two flexible legs (41) are relatively close to the main body (3);
the tubular end piece (2) comprising, on the side of the receiving end (20), two harpoons (21) for being inserted between the main body (3) and the flexible legs (41) of the clip (4) and for keeping the tubular end piece (2) joined to the main body (3) when the main body (3) is inserted into the receiving end (20) of the tubular end piece (2) and when the clip (4) is in the locking position, the harpoons (21) then gripping the legs (41) of the clip (4).

2. Tubular connection device (1) according to the preceding claim, wherein the legs (41) are curved toward the inside of the clip (4).

3. Tubular connection device (1) according to either of the preceding claims, wherein each main guide element (31) comprises a ramp (31a) for guiding the foot (42) of the clip (4) between the release position and the locking position.

4. Tubular connection device (1) according to any of the preceding claims, wherein each main guide element (31) comprises a notch (31b) for receiving the foot (42) of the clip (4) and holding the clip (4) in the release position.

5. Tubular connection device (1) according to any of the preceding claims, wherein the main body (3) comprises on its external surface at least one secondary guide element (32) for receiving part of the clip (4).

6. Tubular connection device (1) according to any of the preceding claims, wherein the main body (3) comprises on its external surface an annular groove (30) for receiving a seal (5).

7. Tubular connection device (1) according to the preceding claim, wherein each harpoon (21) comprises an inclined plane (21b) on the face which is capable of coming into contact with the main body (3) when the main body (3) is inserted into the tubular end piece (2).

8. Tubular connection device (1) according to any of the preceding claims, wherein the end piece (2) also comprises, on its receiving end (20), notches (22) which are shaped to fit the guide elements (31, 32) to prevent any rotation of the tubular end piece (2) on the main body (3).

9. Tubular connection device (1) according to any of the preceding claims, wherein the tubular end piece (2) and the main body (3) have an oval cross section.
